Europäisches Patentamt

European Patent Office

Office européen des brevets

(11) Veröffentlichungsnummer: **0 263 289 B1**

# EUROPÄISCHE PATENTSCHRIFT

(45) Veröffentlichungstag der Patentschrift: **19.11.92**

(51) Int. Cl.5: **H04B 1/66**, H04K 3/00

(21) Anmeldenummer: **87112360.0**

(22) Anmeldetag: **26.08.87**

(54) **Verfahren zur empfängerseitigen Synchronisation in einem Direct-Sequence-Spread-Spectrum-System sowie Anordnung hierzu.**

(30) Priorität: **09.09.86 DE 3630606**

(43) Veröffentlichungstag der Anmeldung:
**13.04.88 Patentblatt 88/15**

(45) Bekanntmachung des Hinweises auf die
Patenterteilung:
**19.11.92 Patentblatt 92/47**

(84) Benannte Vertragsstaaten:
**CH DE FR GB IT LI NL SE**

(56) Entgegenhaltungen:
**DE-A- 3 029 249**

**1982 IEEE MILITARY COMMUNICATIONS
CONFERENCE MILCOM '82, Boston, 17.-20.
Oktober 1982, Band 1, Seiten 20.1-1 - 20.1-5,
IEEE, New York, US; K. ANNECKE: "Adaptive
regeneration of combination spreading
functions by nonlinear control loops"**

**FREQUENZ, Band 40, Nr. 9/10,
September/Oktober 1986, Seiten 266-272,
Berlin, DE; M. OTTKA et al.: "Synchronisation
in einem Direct-
Sequence-Spread-Spectrum-System"**

(73) Patentinhaber: **ANT Nachrichtentechnik GmbH
Gerberstrasse 33
W-7150 Backnang(DE)**

(72) Erfinder: **Ottka, Manfred, Dipl.-Ing.
Stresemannstrasse 38/1
W-7150 Backnang(DE)**
Erfinder: **Seier, Udo, Dipl.-Ing.
August-Lämmle-Strasse 6/2
W-7142 Marbach/N.(DE)**

**Beschreibung**

Die Erfindung betrifft ein Verfahren gemäß dem Oberbegriff des Patentanspruches 1 sowie eine Anordnung zum Durchführen eines solchen Verfahrens. Ein solches Verfahren mit zugehöriger Anordnung ist bekannt aus [6].

In weiten Bereichen der digitalen Nachrichtenübertragung zeichnet sich unter anderem wegen der vergleichsweise hohen Resistenz gegenüber Kanalstörungen eine zunehmende Bedeutung der Spread-Spectrum-Technik ab. Grundsätzlich wird im Vergleich zu den klassischen schmalbandigeren Modulationsverfahren der Vorteil der verbesserten Störunempfindlichkeit mit einem entsprechend vergrößerten Bandbreitebedarf und meist auch mit einem erhöhten Aufwand in der Empfängersynchronisation erkauft.

Neben der Optimierung der störunterdrückenden Verfahrenseigenschaften zielen viele Arbeiten der Vergangenheit und Gegenwart auf Verbesserungen in der Empfängersynchronisation. Einige der wichtigsten Optimierungsziele sind hierbei die Reduktion der Fehlsynchronisationswahrscheinlichkeit, die Beschleunigung des gesamten Synchronisationsvorgangs sowie die Erhöhung der möglichen Spreizcodevielfalt. Ein aus [1, 2] bekanntes Synchronisationsverfahren - "kohärente Addition" oder kurz KA genannt - verspricht die günstige Kombination einer schnellen Synchronisation mit einer vergleichsweise überdurchschnittlich hohen Flexibilität bei der Spreizcodeauswahl.

Bei anderen Synchronisationsverfahren stellt die im Empfänger einzustellende Phase des lokal erzeugten Codes den einzigen nicht fest zwischen Sender und Empfänger vereinbarten Spreizcodeparameter dar. Die KA hingegen schätzt adaptiv im Empfänger die gesamte Spreizcodestruktur mit Ausnahme der voreinzustellenden Codeperiode.

Damit wird der Empfänger weitgehend unabhängig von der alleine im Sender zu definierenden Spreizcodestruktur.

Beim aus [6] bekannten Verfahren wird ebenfalls eine kohärente Addition vorgenommen und zwar für jeden Teilcodezweig getrennt. Teilcodeschätzungen werden durch rekursives Filtern von Grobteilcodeschätzungen erzeugt. Beim rekursiven Filtern wird ein rückgekoppeltes Signal mit der jeweiligen Grobteilcodeschätzung addiert. Das addierte Signal wird begrenzt. Eine neue Codeschätzung wird durch Multiplikation der zwei Teilschätzungen erzeugt. Über die Begrenzung ist in [6] lediglich ausgesagt, daß die Begrenzerschwellen zur sicheren Synchronisation größer als eine untere Mindestschwelle sein müssen und daß die Begrenzerschwellen sehr viel größer als eine Teilcodeperiode sein müssen.

Aufgabe der Erfindung ist es, ein Verfahren gemäß dem Oberbegriff des Patentanspruches 1 anzugeben, welches zu einer möglichst hohen Synchronisierstabilität bei schneller Synchronisierung führt. Außerdem soll eine Anordnung zum Durchführen eines solchen Verfahrens angegeben werden. Diese Aufgabe wird bezüglich des Verfahrens durch die Merkmale des Patentanspruches 1 gelöst und bezüglich der Anordnung durch die Merkmale des Patentanspruches 2. Die weiteren Ansprüche zeigen vorteilhafte Ausgestaltungen dieser Anordnung auf.

Die Erfindung weist folgende Vorteile auf:

Durch die Bedingung nach der Erfindung läßt sich der Verarbeitungsaufwand, insbesondere der Speicherbedarf, gering halten, ohne die Synchronisierstabilität zu verschlechtern. Auch bei Änderung der Spreizcodeperioden ist das Verfahren flexibel; denn durch Nachstellen der Begrenzungsschwellen ist eine Synchronisierstabilität wieder gegeben. Dieses Nachstellen der Begrenzungsschwellen kann bei einer Anordnung zum Durchführen des Verfahrens auf einfache Weise über externe Anschlüsse eines Gate-Arrays erfolgen, das die Empfangsbaugruppen enthält. Die im Gegensatz zum Verfahren [6] bezüglich der Schwellwerte schärfere Forderung gewährleistet eine sichere Synchronisierung mit begrenztem Verarbeitungsaufwand.

Die Erfindung wird nun anhand der Zeichnungen beispielhaft erläutert. Es zeigen

Figur 1 ein Blockschaltbild für ein Direct-Sequence-Spread-Spectrum-System,

Figur 2 ein Prinzipschaltbild der kohärenten Addition,

Figur 3 ein Prinzipschaltbild der kohärenten Addition in digitaler Realisierung,

Figur 4 ein Prinzipschaltbild einer Synchronisationsschal-tung nach dem Verfahren der kohärenten Addition für zwei kombinierte Spreizcodes,

Figur 5 und 6 Prinzipschaltbilder von Gate-Arrays für die Realisierung der kohärenten Addition nach der Erfindung,

Figur 7 den typischen zeitlichen Verlauf der Codefehler in der Schätzung $\hat{c}$,

Figur 8 die Änderung eines einzelnen ausgewählten Elements eines Rückkoppelsignals während der Synchronisation,

Figur 9 ein Vergleich zwischen gemessenen und berechneten Synchronsationszeiten.

Zuerst werden einige bekannte Begriffe und Beziehungen erläutert, die das Verständnis der anschließenden Beschreibung der Erfindung erleichtern.

2

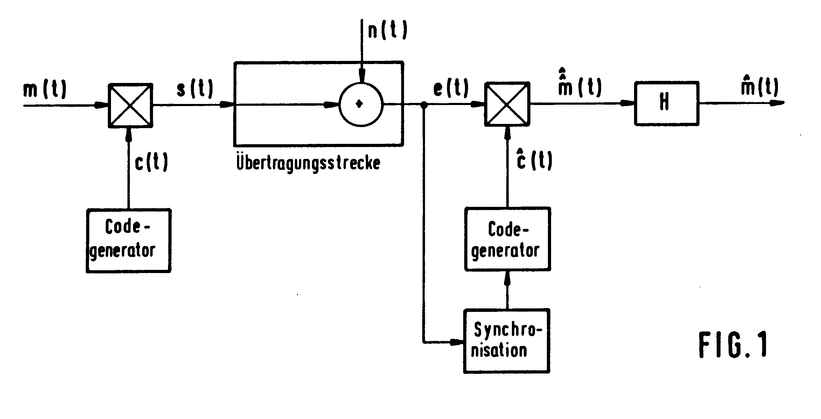

Einem Direct-Sequence-Spread-Spectrum-System läßt sich prinzipiell das in Figur 1 dargestellte Blockschaltbild zugrundelegen. Ein informationstragendes Nutzsignal m(t) wird multiplikativ mit einem periodisch wiederholten Spreizcode

$$c(t) = c(t-j \cdot t_p) = \sum_{i=0}^{m_C-1} d_i \cdot rect\left(\frac{t-iT_C}{T_C}\right) \qquad (1)$$

$$j \in \mathbb{Z}, \; T_p = m_C \; T_C, \; m_C \in \mathbb{N}$$

$$\text{mit } rect(t) = \begin{cases} 1, & |t| < \frac{1}{2} \\ 0, & \text{sonst} \end{cases}$$

zum Spread-Spectrum-Signal $s(t) = m(t) \cdot c(t)$ verknüpft. Der Spreizcode c(t) wird mittels eines Codegenerators erzeugt. Die Symbole $d_i \in \{-1, +1\}$ in (1) werden üblicherweise als "Chips" bezeichnet. Typischerweise wird in einem Spread-Spectrum-System für die Fouriertransformierte B(f) des Signals m(t) eine Bandbegrenzung

$B(f) = 0$ für $|f| > B_m$     (2)

mit $B_m \ll 1/T_C$ vorausgesetzt. Das auf der Übertragungsstrekke durch ein Störsignal n(t) additiv gestörte Empfangssignal $e(t) = s(t) + n(t)$ wird im sogennanten Entspreizer durch multiplikative Verknüpfung mit einem lokal erzeugten Spreizcode $\hat{c}(t)$ im Falle $\hat{c}(t) = c(t)$ in eine Schätzung

$\hat{m}(t) = \hat{c}(t) \cdot e(t) = m(t) + n(t) \cdot \hat{c}(t)$     (3)

für das Nutzsignal verwandelt. Eine nachgeschaltete, dem Signal m(t) angepaßte Signalverarbeitung H reduziert anschließend den Einfluß des Störterms in (3), so daß

$\hat{m}(t) = m(t) + H\{n(t) \cdot \hat{c}(t)\}$     (4)

eine entsprechend verbesserte Schätzung des Nutzsignals darstellt. Im einfachsten Fall ist H ein Filter, das eine Nutz-zu Störleistungsoptimierung durchführt (Matched Filter, Wiener Filter). Die Bedingung $\hat{c}(t) = c(t)$ wird in der Praxis meist durch eine identische Realisierung des Sende- und Empfangscodegenerators in Verbindung mit einer Synchronisationseinrichtung hergestellt. Das nachfolgend beschriebene Synchronisationsverfahren ersetzt den Empfangscodegenerator durch eine Schätzeinrichtung für den Spreizcode. Die Empfängerrealisierung wird dann mit Ausnahme der einzustellenden Periodendauer unabhängig von der Spreizcodestruktur.

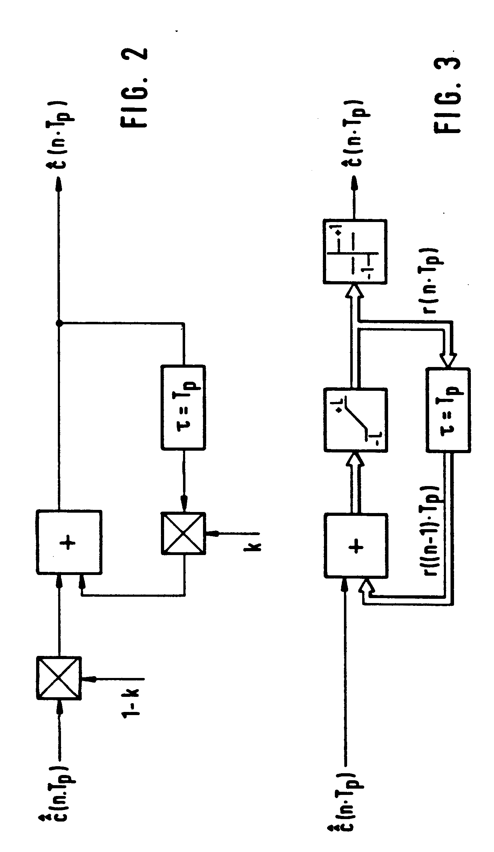

Ein sehr attraktives Synchronisationsverfahren hinsichtlich Codeflexibilität und schneller Einschwingzeit ist die sogenannte "kohärente Addition", im folgenden kurz KA bezeichnet. Figur 2 zeigt hierzu eine vereinfachte Anordnung. Sie besteht aus einem rekursiven Filter mit der Laufzeitkette $\tau = T_p$. Ihr Verhalten ist im Falle einer Realisierung als Abtastsystem durch die Rekursionsgleichung

$\hat{c}(n) = (1-k)\hat{\hat{c}}(n) + k.\hat{c}(n-1) \; k < 1$     (5)

mit $n \overset{def}{=} n \cdot T_p$
gegeben. Die Größe $T_p = m_C \cdot T_C$ bezeichnet hierbei die Spreizcodeperiodendauer. Setzt man im Eingangssignal

$\hat{\hat{c}}(n) = c(n) + N(n)$     (6)

statistisch unabhängige, mit c(n) unkorrelierte Abtastwerte eines Störsignals N(n) voraus, so konvergiert der Erwartungswert des zunächst noch mit dem Fehler $\epsilon(n)$ behafteten Ausgangssignals

$$\hat{c}(n) = c(n) + \epsilon(n) \qquad (7)$$

gegen

$$\lim_{n \to \infty} \left\{ E \, \hat{c}(n) \right\} = c(n) + E\left\{N\right\}. \qquad (8)$$

Bei Kenntnis der Erwartungswerte $E\{N\}$ des Störsignals läßt sich somit mit Hilfe der KA eine Rekonstruktion eines periodischen Spreizcodes $c(t) = c(t-j \cdot T_p)$, je $Z$ aus einer gestörten Speizcodeschätzung $\hat{c}(t)$ gewinnen. Eine große Klasse der in der Praxis vorliegenden Störsignale ist überdies mittelwertfrei, so daß

$$\lim_{n \to \infty} E\left\{\hat{c}(n)\right\} = c(n) \qquad (9)$$

gilt.

Um Nutz- zu Störleistungsverhältnisse S/N in den Signalen der KA betrachten zu können, sind neben dem Erwartungswert Signalmomente 2. Ordnung von praktischem Interesse. Eine entsprechende Analyse [1] führt für $n \to \infty$ zur Beziehung

$$\left(\frac{S}{N}\right)_{\hat{c}} = \frac{1+k}{1-k} \left(\frac{S}{N}\right)_{\hat{\hat{c}}} . \qquad (10)$$

Im Falle der in Figur 3 dargestellten "digitalen" Realisierung mit $\hat{c}(nT_p)$, $\hat{\hat{c}}(nT_p) \epsilon \{+1, -1\}$ und einer Zahlenbereichsbegrenzung $|r(n \cdot T_p)| \leq L$ kann ein vergleichbarer Zusammenhang

$$\lim_{n \to \infty} p_{\hat{c}}(n \cdot T_p) = \frac{\left[p_{\hat{\hat{c}}}/(1-p_{\hat{\hat{c}}})\right]^{L}}{\left[1+ p_{\hat{\hat{c}}}/(1-p_{\hat{\hat{c}}})\right]^{L}} \qquad (11)$$

zwischen $p_{\hat{\hat{c}}}$ der eingangsseitigen, und $p_{\hat{c}}$ der ausgangsseitigen Fehlerwahrscheinlichkeit angegeben werden. Bei dieser Begrenzung des Zahlenvorrats für das Rückkopplungssignal $r(n \cdot T_p)$ erscheint am Ausgang des kohärenten Addierers bei Bereichsüberschreitung der maximal durch L festgelegte Zahlenwert. Setzt man für die Schätzung der einzelnen Chips in $\hat{\hat{c}}$ einen Matched-Filter-Empfang mit

$$p_c = \frac{1}{2} \, \mathrm{erfc} \sqrt{\frac{1}{2} \left(\frac{S}{N}\right)_{\hat{\hat{c}}}} \qquad *)$$

$$*) \quad \mathrm{erfc}(x) = \frac{2}{\sqrt{\pi}} \int_{x}^{\infty} e^{-y^2} \, dy$$

bezeichnet die sogenannte komplementäre Fehlerfunktion voraus, so kann dieser Zusammenhang näherungsweise durch

4

$$\left(\frac{S}{N}\right)_{\hat{c}} = \frac{2}{\pi} \cdot \frac{1+k_{eff}}{1-k_{eff}} \cdot \left(\frac{S}{N}\right)_{\hat{\tilde{c}}} \qquad (12)$$

$$k_{eff} \approx 1 - \frac{16}{\pi (L/2)^2}$$

interpretiert werden [1].

Ein Spreizcode $c(t)$ läßt sich häufig aufwandsgünstig durch multiplikative Verknüpfung von Teilcodes kürzerer Periode aufbauen [3]. Wählt man die auf den Chiptakt $T_c$ bezogenen Teilcodeperioden $m_{ci} = T_{pi}/T_c$ teilerfremd entsprechend der Bedingung

$$n_i \cdot m_{ci} \neq n_k m_{ck}, \ n_i \epsilon N/\{m_{ck}\}, \ n_k \epsilon N/\{m_{ci}\}, \qquad (13)$$

so ergibt sich die Gesamtperiode

$$\frac{T_p}{T_c} = \prod_{i=1}^{l} \frac{T_{pi}}{T_c} \ , \ l \in N \qquad \qquad (14)$$

als Produkt der bezogenen Teilcodeperioden.

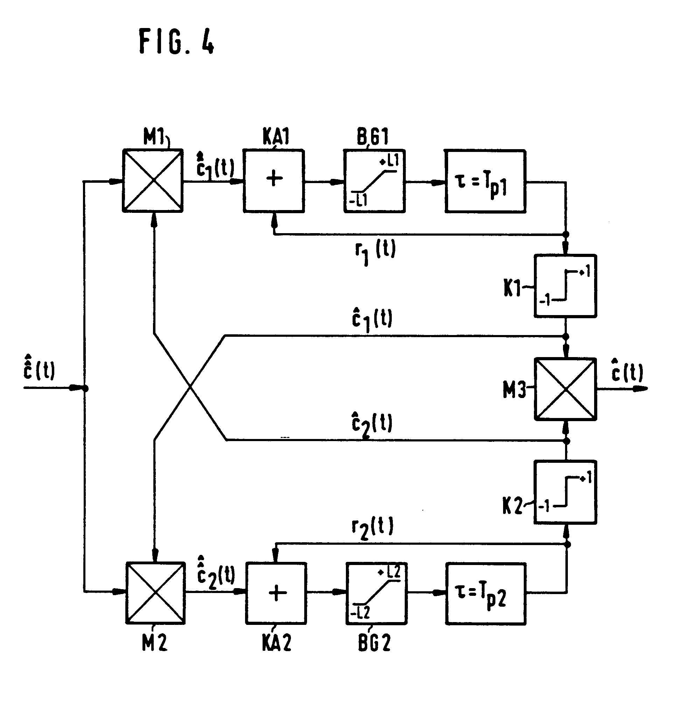

Als Beispiel zeigt Figur 4 eine Realisierung einer Synchronisationsschaltung nach dem Verfahren der KA für zwei kombinierte Spreizcodes.

Die durch ein Fehlersignal $\hat{\epsilon}(t) \epsilon \{1, -1\}$ gestörte Spreizcodeschätzung $\hat{\tilde{c}}(t) = c_1(t) \cdot c_2(t) \cdot \hat{\epsilon}(t)$ wird durch Multiplikation mit einer Teilcodeschätzung $\hat{c}_k(t) = c_k(t) \cdot \epsilon_k(t)$ wegen $c_k(t) \cdot c_k(t) = 1$ näherungsweise nach

$$\hat{\tilde{c}}_i(t) = \hat{\tilde{c}}(t) \cdot \hat{c}_k(t) = c_i(t) \cdot \hat{\epsilon}_i(t), \ \hat{\epsilon}_i(t) = \hat{\epsilon}(t) \cdot \epsilon_k(t) \ i, k = 1, 2 \qquad (15)$$

von $c_k(t)$ befreit, so daß mit einem nachgeschalteten rekursiven KA-Filter die Fehlerwahrscheinlichkeit $p_{\hat{c}i} = prob\{\hat{\epsilon}_i(t) = -1\}$ im Teilcode entsprechend (11) reduziert werden kann. Aus der Verknüpfung der beiden Teilcodeschätzungen $\hat{c}_1(t)$ und $\hat{c}_2(t)$ zur Codeschätzung $\hat{c}(t)$ entsteht dann die Gesamtcodeschätzung mit entsprechend verringerter Fehlerwahrscheinlichkeit $p\hat{c} = p\hat{c}_1(1-p\hat{c}_2) + P\hat{c}_2(1-p\hat{c}_1)$.

Die Struktur der Synchronisationsschaltung gemäß Figur 4 ist folgendermaßen:

Das Empfangssignal, aus dem durch eine Grobschätzung das Signal $\hat{\tilde{c}}(t)$ hervorgeht, wird jeweils einem Multiplizierer M1, M2 zugeführt. Am Ausgang dieser Multiplizierer erscheinen die Teilcodeschätzungen $\hat{\tilde{c}}_1(t)$ und $\hat{\tilde{c}}_2(t)$. Die Teilcodeschätzungen werden den Addierern KA1 und KA2 zugeführt. An deren Ausgänge schließen sich jeweils Begrenzerstufen BG1, BG2 mit den Zahlenbereichsbegrenzerschwellen ±L1, ±L2 an. Laufzeitketten mit Laufzeiten $T_{p1}$ und $T_{p2}$ sind den Begrenzern nachgeschaltet. Die Ausgangssignale der Laufzeitketten werden den Addierern KA1, KA2 als Rückkopplungssignale $r_1(t)$ bzw. $r_2(t)$ zugeführt. Jeder Laufzeitkette ist ein Komparator K1, K2 nachgeschaltet, der jeweils das Vorzeichen der Teilcodeschätzungen $\hat{c}_1(t)$, $\hat{c}_2(t)$ feststellt. Die Multiplizierer M1, M2 erhalten die jeweils teilerfremde Teilcodeschätzung an ihren Multipliziereingängen von den Ausgängen der Komparatoren K1, K2 zugeführt. Über den Multiplizierer M3 werden die verbesserten Teilcodeschätzwerte $\hat{c}_1(t)$ und $\hat{c}_2(t)$ zum verbesserten Schätzwert $\hat{c}(t)$ verknüpft.

Wegen der grundsätzlich nicht mehr erfüllten statistischen Unabhängigkeit der Fehler in $\hat{\tilde{c}}_i(t)$ gilt Gleichung (11) nur mehr approximativ für $2L_i \gg m_{ci}$.

Die mittlere Einschwingzeit und die Wahrscheinlichkeit für Fehlsynchronisation sind zwei wichtige für die Praxis oft sehr entscheidende Parameter einer Synchronisationsschaltung. Die Problematik einer instabilen Fehlsynchronisation kann durch Aspekte der digitalen Realisierung, wie Quantisierung und Begrenzung der Signale, noch verschärft werden. Eine exakte statistische Beschreibung des Einschwingverhaltens der vorliegenden Anordnung ist ein schwieriges Problem. Sie setzt u.a. die Kenntnis von zeitvarianten Verteilungsdichtefunktionen der beteiligten Signale voraus und ist vor allem wegen der Komplexität der Anordnung praktisch kaum durchführbar. In [1] ist unter der Voraussetzung $2L_i \gg m_{ci}$ eine näherungsweise Systembeschreibung durchgeführt. Ausgehend von Anfangswerten $r_i(0) = 0$ in den Speichern der kohärenten Addition und einem vorgebbaren Kreuzkorrelationskoeffizienten

$$\rho_{00} = \rho_{c\hat{c}}(nT_p)\Big|_{n=0} = \frac{E\{c(n \cdot T_p) \cdot \hat{c}(n \cdot T_p)\}}{E\{c(nT_p)^2\} \cdot E\{\hat{c}(nT_p)^2\}}\Bigg|_{n=0} \qquad (16)$$

zwischen Sender- und Empfängercode zu Beginn der Synchronisation, kann eine Abschätzung

$$T_{syn} \approx N_{syn} \cdot m_{cc} \cdot T_c \text{ mit } m_{cc} \approx \sqrt{m_c}, \qquad (17)$$

für die mittlere Anfangssynchronisationszeit der KA mit zwei Teilcodes gewonnen werden, wobei $N_{syn}$ die Lösung der Gleichung

$$N_{syn} = \frac{\rho_{00} \sqrt{\tau}}{2(1-2p_{\hat{c}})} \cdot e^{\left[\frac{2(1-2p_{\hat{c}})}{\sqrt{\tau}} \cdot \sqrt{N_{syn}} - 1\right]} \qquad (18)$$

darstellt. Unter den zuvorgenannten Voraussetzungen kann gezeigt werden, daß mit einem Anfangswert $\rho_{00}$ > 0 die KA gegen einen Kreuzkorrelationskoeffizient

$$\rho_{ss} = \lim_{n \to \infty} \rho_{c\hat{c}}(nT_p) > 0$$

konvergiert. Die Größe von $\rho_{ss} \approx 1-2 \, p_{\hat{c}}$ ist eine Funktion von $p_{\hat{c}}$ und läßt sich unter Anwendung von (11) auf

$$p_{\hat{c}i} \approx p_{\hat{c}}(1-p_{\widehat{ci}}) + (1-p_{\hat{c}}) \, p_{\widehat{ci}}, \, i = 1, 2$$
$$p_{\hat{c}} = p_{\widehat{c}_1}(1-p_{\widehat{c}_2}) + (1-p_{\widehat{c}_1}) \, p_{\widehat{c}_2} \qquad (19)$$

bestimmen.

Da der Parameter $L_i$ ein Maß für den erforderlichen Realisierungsaufwand im Empfänger darstellt, ist eine schärfere Abschätzung als $2L_i >> m_{ci}$ von großem praktischen Interesse. Die Einbeziehung von $L_i$ in eine näherungsweise Beschreibung der Empfängersynchronisation gibt hier erste Hinweise. Im übrigen kann bei einer Resynchronisation nach einem kurzzeitigen Synchronisationsverlust die Voraussetzung $r_i(0) = 0$ für (17, 18) nicht mehr aufrecht erhalten werden.

In [1] wird für eine mittlere Resynchronisationszeit die Näherung

$$T_{Resyn} \approx \frac{1}{2} \, m_{cc} \cdot T_c \, \frac{-\ln(\rho_{00}) \, L^2 \tau}{(1-2p_{\hat{c}}) \cdot L - 2} \qquad (20)$$

mit $L = L_1 = L_2$
und $(1-2p_{\hat{c}}) \cdot L > 2$
abgeleitet.

Der Zusammenhang zwischen der Auftrittshäufigkeit von über Rechnersimulationen zweifelsfrei nachweisbaren instabilen Grenzzyklen und der Größe der Zahlenbereichsgrenzen $\pm L_i$ wird nachfolgend anhand einer erfindungsgemäßen Anordnung behandelt. Grundsätzlich wird das Problem der Synchronisierstabilität dann noch zusätzlich erschwert, wenn die kohärente Addition in ein Gesamtempfängerkonzept eingebettet wird. Die Erweiterung der Anordnung durch dann notwendige Regelkreise, wie zum Beispiel die Chiptaktablei-

6

tung, die Signalschätzung $\hat{m}$ oder die Spreizcodeschätzung $\hat{c}$, erhöhen die Gefahr der Instabilität eines solchen mehrfach verkoppelten nichtlinearen Regelsystems.

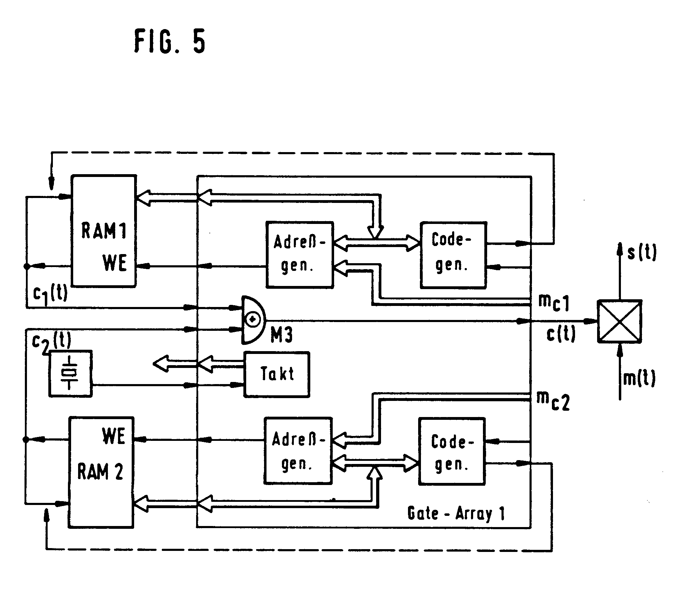

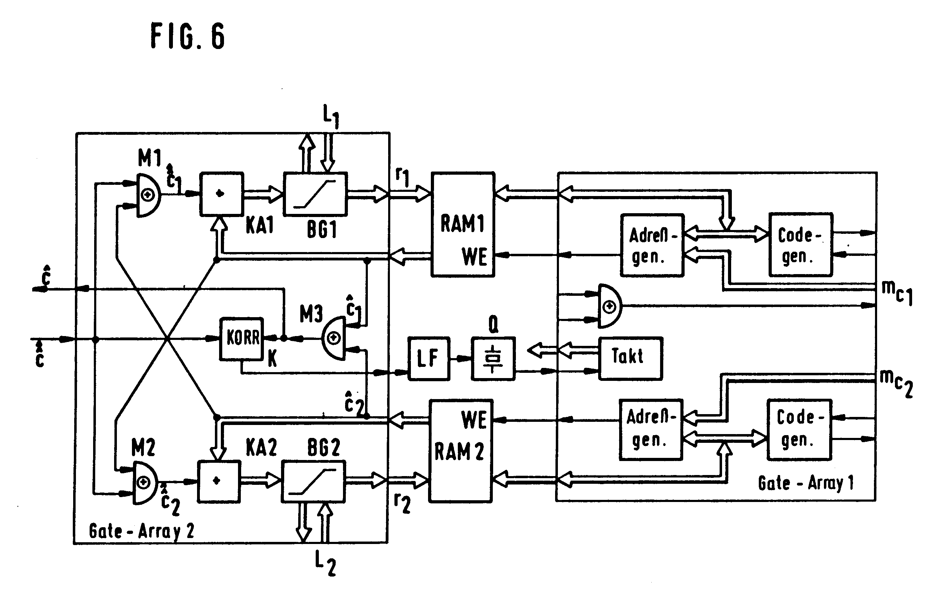

Als praktische Anordnung dienen zwei Schaltungen als Kernbausteine für die Empfängersynchronisation. Die beiden Schaltungen sind in Form von digitalen Gate-Arrays mit einer Komplexität von jeweils etwa 2500 Gatter-Äquivalenten realisiert. Die Figuren 5 und 6 zeigen hierzu vereinfachte Prinzipschaltbilder für die mit den beiden Bausteinen realisierten Systemteile. Gate-Array 1 wurde so entworfen, daß es sowohl im Sender zur Codeerzeugung, als auch im Empfänger mit dem Schwerpunkt der zeitlichen Steuerung der KA eingesetzt werden kann. Die Sendecodes sind im Sender in Schreib-Lese-Speichern RAM1, RAM2 abgelegt, so daß eine hohe Flexibilität bezüglich der Codewahl besteht. Als Codequellen können dann die zusätzlich integrierten programmierbaren Codegeneratoren oder auch weitgehend beliebige externe Quellen dienen, wobei die Spreizcodeperioden $m_{c1}$, $m_{c2}$ durch Programmierung der Adreßgeneratoren eingestellt werden. Bei den Codegeneratoren, die als rückgekoppelte Schieberegisteranordnungen realisierbar sind, sind beliebige Generatorpolynome frei programmierbar. Bei der Anordnung gemäß Figur 5 sind die Baugruppen Adreßgenerator und Codegenerator für die einzelnen Teilcodesequenzen $c_1(t)$ und $c_2(t)$ ebenso wie der Multiplizierer M3 - EXOR-Gatter - zur Verknüpfung der Teilcodesequenzen und die Taktableitung zu einem Gate-Array 1 vereinigt. Die Schreib-Lese-Speicher RAM1 und RAM2 sind extern angeordnet. Die Einstellung der Teilcodelängen erfolgt über die Eingänge $m_{c1}$ und $m_{c2}$ der Adreßgeneratoren. Zusätzliche Ein- und Ausgänge erlauben die Kaskadierung. Neben der Erzeugung von m-Sequenzen mit prinzipiell bei Kaskadierung unbegrenzter Periodendauer können durch andere Verschaltungen beliebige Gold-Codes [4, 5] realisiert werden.

Dabei kann fortlaufend zwischen den Codes eines Gold-Code-Kollektivs in aufeinanderfolgenden Zeitintervallen einstellbarer Dauer gewechselt werden.

Eine weitere Variationsmöglichkeit in der Codeerzeugung bietet die in Figur 6 dargestellt Version der Codeerzeugung. Die Generatorpolynome der Codegeneratoren werden dabei ständig durch die ebenfalls pseudo-zufällig erzeugten Speicherbausteinadressen umgeschaltet.

In der Empfängersynchronisation nach Figur 6 wird Gate-Array 1 ebenfalls eingesetzt. Es übernimmt nun im wesentlichen die Zeitablaufsteuerung der KA. Alle anderen Funktionen der KA sind größtenteils in Gate-Array 2 im Zusammenwirken mit den externen Schreib-Lese-Speichern RAM1 und RAM2 realisiert. Wie beim Sender können entsprechend auch beim Empfänger die Teilcodeperioden $m_{c1}$, $m_{c2}$ in weiten Bereichen frei gewählt werden, um so im Zusammenspiel mit der ebenfalls einstellbaren Stufenzahl $L_1$ bzw. $L_2$ der Signale $r_1$ bzw. $r_2$ das Auftreten der bereits erwähnten instabilen Grenzzyklen zu untersuchen. Zusätzlich sind in den Gate-Arrays digitale Komponenten für eine Chiptaktableitung integriert, die mit Hilfe externer Analog-Bausteine wie Regelfilter LF und Qarzoszillator, zu einem vollständigen "Delay-locked-Loop" ergänzt werden.

Die Anordnung gemäß Figur 6 enthält alle Strukturelemente der Anordnung gemäß Figur 4 wie Multiplizierer M1, M2 - hier als EXOR-Gatter ausgebildet -, Addierer KA1, KA2, Begrenzerstufen BG1, BG2, Multiplizierer M3 - EXOR-Gatter - in entsprechender Zusammenschaltung. Die Laufzeitketten mit den Laufzeiten $T_{p1}$ und $T_{p2}$ sind hier jeweils durch die Schreib-Lesespeicher RAM1, RAM2 in Verbindung mit umlaufenden Adreßzählern - Adreßgeneratoren - realisiert, die auf die einzelnen Codelängen programmiert sind. Die Codelängeneinstellung erfolgt extern über die Eingänge $m_{c1}$ und $m_{c2}$ ebenso wie die Einstellung der Begrenzerschwellen $L_1$ und $L_2$. In Abweichung zu Figur 4 weist die Realisierung gemäß Figur 6 noch einen Korrelator K auf. Dieser ist Bestandteil der DLL-Schleife über die die Taktableitung erfolgt. Dieser Korrelator K verknüpft die dem Eingang der Schaltung zugeführten groben Schätzwerte $\hat{c}$ mit den verbesserten Schätzwerten $\hat{c}$ am Ausgang des die Teilcodeschätzwerte verknüpfenden Multiplizierers M3. Der Ausgang des Korrelators führt zum extern angeordneten Loop-Filter LF der DLL-Schleife.

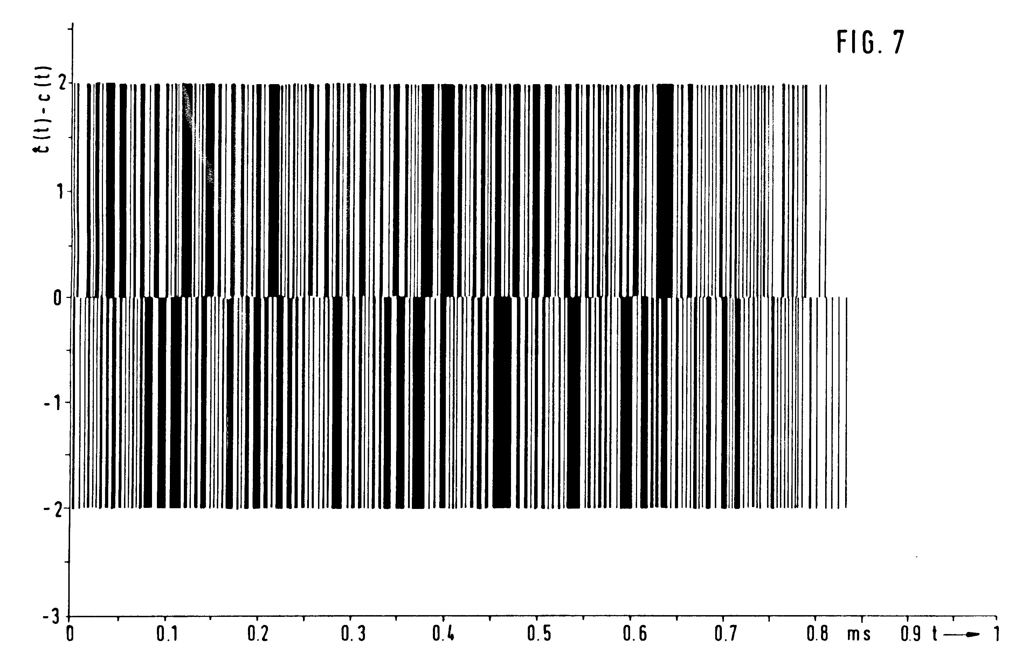

Figur 7 zeigt beispielsweise den typischen zeitlichen Verlauf der Codefehler in der Schätzung $\hat{c}$ bei einem störungsfreien erfolgreichen Synchronisationsversuch mit der Anordnung gemäß Figur 6. In Figur 7 ist die Differenz zwischen den Schätzwerten $\hat{c}(t)$ und der Originalsequenz $c(t)$ über der Zeit dargestellt. Da die beiden Sequenzen nur die Werte 1 und -1 aufweisen können, ergeben sich für die Differenz Werte zwischen +2 und -2. Wie aus Fig. 7 ersichtlich ist, wird die Differenz zwischen Schätzwert $\hat{c}(t)$ und Originalsequenz $c(t)$ mit zunehmender Zeit t zu 0. Nach etwa 0,8 ms ist Synchronität zwischen $\hat{c}(t)$ und c(t) hergestellt. Die gewählten Codeperioden betragen $m_{c1} = 31$ und $m_{c2} = 33$; die Begrenzerschwellen sind auf den Wert $L_1 = L_2 = 128$ gestellt. Verringert man den Wert der Begrenzerschwellen, so beschleunigt sich im allgemeinen der Einschwingvorgang.

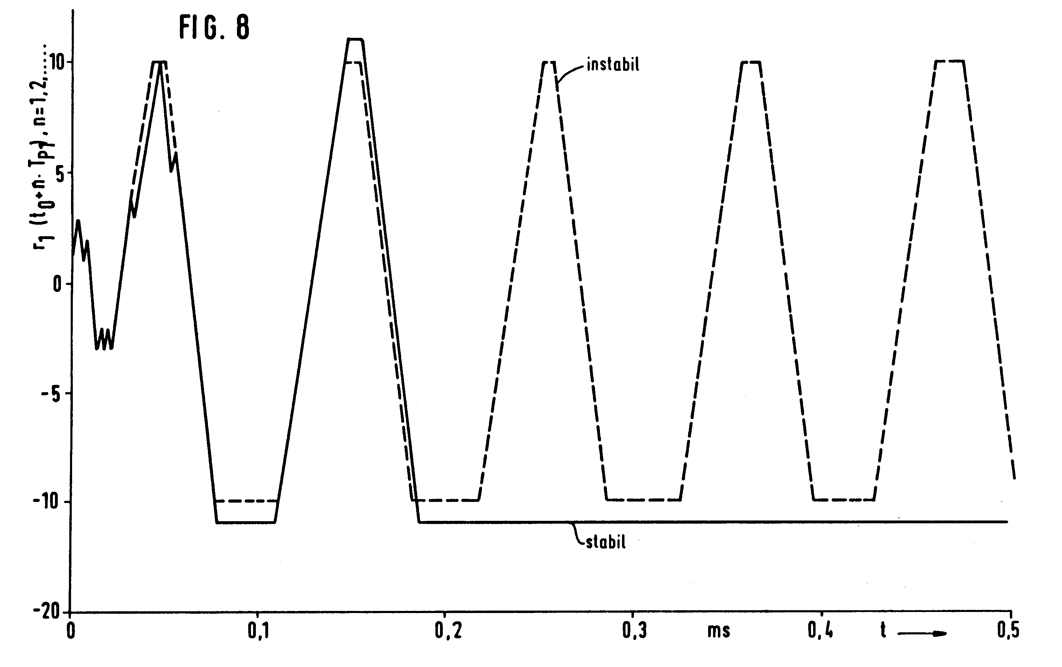

Aufschlußreich für das Einschwingverhalten ist die in Figur 8 wiedergegebene Änderung eines einzelnen willkürlich ausgewählten Elements des Rückkoppelsignals $r_2$ während der Synchronisation. Dieser Verlauf ist typisch und kann prinzipiell ähnlich, wenn auch in unterschiedlichen Phasenlagen, in allen Elementen der Signale $r_1$ und $r_2$ beobachtet werden. Bei einer zu starken Reduzierung der Begrenzerschwellen, hier auf

$L_1 = L_2 = 10$, entsteht ein instabiler, nicht erwünschter Grenzzyklus, währenddessen alle Elemente von $r_1$ und $r_2$ fortlaufend zwischen den Begrenzerschwellen jedoch mit ständig wechselnder Verweildauer auf den Schwellen pendeln. Erst nach exakt

$$m_{inst} = \frac{(m_{c1} \cdot L_1 + m_{c2} \cdot L_2) \; m_c}{ggT(L_1, L_2, m_c)} = 654720 \qquad (21)$$

wobei ggT der größte gemeinsame Teiler ist, Takten schließen sich alle Verläufe der Signale $r_1, r_2, \hat{c}_1, \hat{c}_2$ zu einer vollständigen Periode des Grenzzyklus. Alle bisher beobachteten Instabilitäten der KA sind von prinzipiell gleichem Typ mit einheitlich durch (21) darstellbaren Perioden.

Mit der Anordnung gemäß Figur 6 lassen sich in effektiver Weise Auftrittshäufigkeiten für instabile Synchronisationsversuche bestimmen.

Messungen und Simulationen zeigten, daß der schon in Figur 8 wiedergegebene ständige Vorzeichenwechsel in $\hat{c}_1, \hat{c}_2$ typisch für Instabilität ist. Offenbar ist der durch kleine Werte von $L_1$, $L_2$ selbst im stationären Zustand noch mögliche Zusammenhang

$$\hat{c}_1((n + m_c) \cdot T_p) \neq \hat{c}_1(n \cdot T_p)$$
$$\hat{c}_2((n + m_c) \cdot T_p) \neq \hat{c}_2(n \cdot T_p) \text{ und}$$
$$\hat{c}_1((n + m_c) \cdot T_p) \cdot \hat{c}_2((n + m_c) \cdot T_p) = \hat{c}_1(n \cdot T_p) \cdot \hat{c}_2(n \cdot T_p) \qquad (22)$$

ein Kriterium für Instabilität. Durch Einhalten der Bedingung

$$L_i^2 \geq \frac{1}{4} m_{c1} \cdot m_{c2} \quad \text{mit} \quad m_{c1} \approx m_{c2}, \quad i = 1, 2 \qquad (23)$$

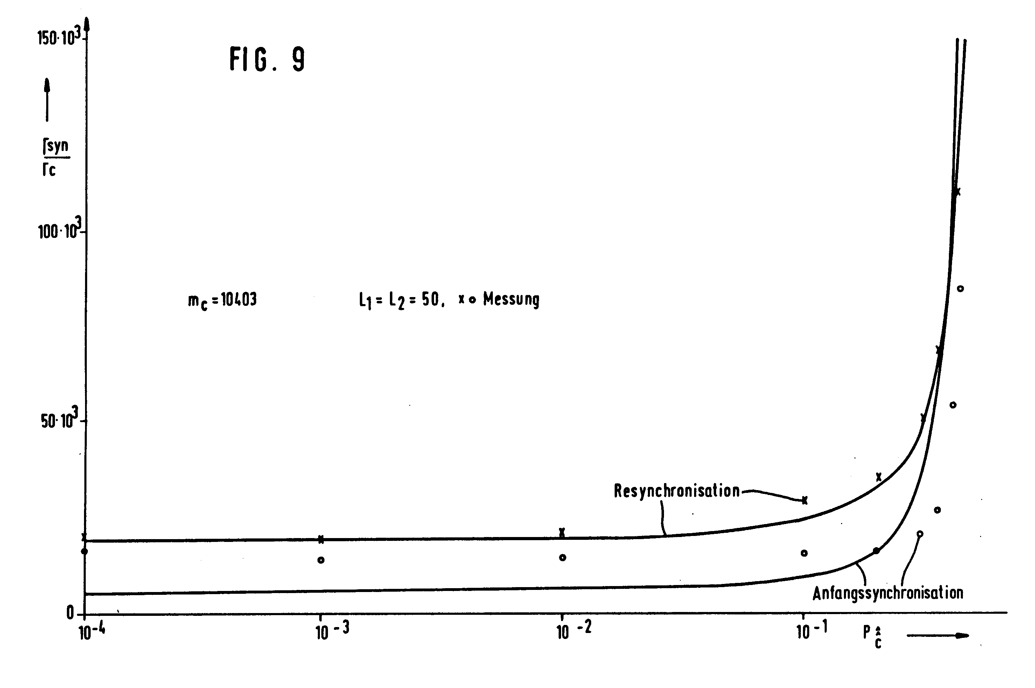

kann das Auftreten dieses Zusammenhangs verhindert werden, so daß die Ungleichung als Abschätzung für die Wahl von $L_1$, $L_2$ verwendet wird. In Figur 9 wird ein Vergleich zwischen gemessenen mittleren Synchronisationszeiten $T_{syn}$ und den nach (17) und (20) berechneten Werten gezogen. Jeder Meßwert wurde durch Mittelung über jeweils 200 Einzelmessungen gewonnen. Zu Beginn jeder Messung wurden jeweils neue Sendecodes und Anfangsverteilungen in den Empfangsspeichern generiert. Die Begrenzerschwellen wurden auf die nach (23) definierten Minimalwerte, d.h. auf $L_1 = L_2 = 50$ eingestellt. Die Eingangscodefehlerquote für die Synchronisationseinrichtung wurde mit einem digitalen Fehlergenerator erzeugt. Als Kriterium für das Ende einer Synchronisation wurde eine Ausgangscodefehlerquote kleiner als $10^{-3}$ gewählt. Wie sich zeigte, beschreibt das der Resynchronisation zugrundeliegende Modell das Einschwingverhalten hinreichend genau; das Modell für die Anfangssynchronisation ist als nicht so exakt einzustufen.

Bedingt durch die starke Verkopplung der KA mit dem Delay-locked-Loop (DLL) der Taktableitung kann zumindest zu Beginn einer Synchronisation der DLL nicht mehr als zeitinvariantes Regelsystem beschrieben werden. Die Messungen mit dem Aufbau gemäß Figur 6 zeigen jedoch, daß bei einem hinreichend kleinen Ruhefrequenzfehler des lokalen Oszillators ($<10^{-5}$) und geeigneter Dimensionierung des Regelfilters sich das Verhalten der KA nur unwesentlich gegenüber dem bei einer idealen Taktableitung verändert.

Literatur zum Stand der Technik:

(1) Annecke, K.H.; Entscheidungsunterstützte Synchronisationverfahren für breibandige Trägersignale, Dissertation, TH Aachen, 1980.
(s. auch DE-OS 30 13 392, DE-PS 30 29 249)
(2) Annecke, K.H.; Anfangssynchronisation von Signalen mit großem Zeit-Bandbreite-Produkt, Wissenschaftliche Berichte, AEG-Telefunken 54 (1981) 1/2, S. 1-10.
(3) Milstein, L.B.; Combination Sequences for Spread Spectrum Communications, IEEE Transact. on Communications, Vol. COM-25 (1977), S. 691-696.
(4) Holmes, J.K.; Coherent Spread Spectrum Systems, John Wiley and Sons, New York 1982, S. 551-562.
(5) Dixon, R.C.; Spread Spectrum Systems, John Wiley and Sons, New York, 1976, S. 72-75.
(6) Annecke, K.H.; Adaptive regeneration of combination spreading functions by nonlinear control loops, 1982 IEEE Military Communications Conference MILCOM '82, Boston, 17. - 20. Oktober 1982, Band 1, Seiten 20.1-1 bis 20.1-5.

**Patentansprüche**

1. Verfahren zur empfängerseitigen Synchronisation in einem Direct-Sequence-Spread-Spectrum-System mit kombinierten Spreizcodes unter Verwendung der kohärenten Addition, mit folgenden Schritten:
   a) der Spreizcode ($c(t)$) wird durch Multiplikation von mindestens zwei Teilcodes ($c_1$, $c_2$) gebildet,
   b) aus dem empfangenen Signal wird eine Grobschätzung ($\hat{c}(t)$) des Spreizcodes gewonnen,
   c) aus dieser Grobschätzung ($\hat{c}(t)$) werden Grobteilcodeschätzungen ($\hat{c}_1(t)$), $\hat{c}_2(t)$) durch Multiplikation mit der jeweiligen teilerfremden Teilcodeschätzung ($\hat{c}_1(t)$, $\hat{c}_2(t)$) erzeugt, wobei diese Teilcodeschätzungen jeweils durch rekursives Filtern der so gewonnenen Grobteilcodeschätzungen erzeugt werden,
   d) beim rekursiven Filtern wird ein rückgekoppeltes Signal ($r_1(t)$, $r_2(t)$) mit der jeweiligen Grobteilcodeschätzung addiert,
   e) dieses addierte Signal wird begrenzt, und
   f) eine neue Codeschätzung ($\hat{c}(t)$) wird durch Multiplikation der zwei Teilschätzungen ($\hat{c}_1(t)$, $\hat{c}_2(t)$) erzeugt,

   dadurch gekennzeichnet, daß zur Erreichung einer besseren Synchronisierstabilität mindestens die Bedingung:

$$L_i^2 \gtrsim \frac{1}{4}\, m_{c1} \cdot m_{c2}$$

   eingehalten wird, wobei
   L die Begrenzungsschwelle des Zahlenvorrats für das Rückkopplungssignal bei der kohärenten Addition,
   $m_{ci}$ die Länge der verwendeten Spreizcodeperioden,
   $\gtrsim$ größer als oder ungefähr gleich und
   i = 1, 2
   bedeuten.

2. Anordnung zum Durchführen einer empfängerseitigen Synchronisation in einem Direct-Sequence-Spread-Spectrum-System mit kombinierten Spreizcodes unter Verwendung der kohärenten Addition mit einer DLL (Delay-Locked-Loop)-Schleife, mit folgenden Baugruppen:
   - einem Multiplizierer (M1, M2) für jeden Teilcodezweig, dem eine Grobschätzung ($\hat{c}(t)$) des empfangenen Signals zuführbar ist,
   - jeweils einem Addierer (KA1, KA2) für eine kohärente Addition einer Teilcodeschätzung ($\hat{c}_1(t)$, $\hat{c}_2$-(t)) nach jedem Multiplizierer (M1, M2),
   - jeweils einer Begrenzerstufe (BG1, BG2) mit nachgeschaltetem Laufzeitglied ($\tau$) am Ausgang jedes Addierers (KA1, KA2), wobei die Zahlenbereichsbegrenzerschwelle jeder Begrenzerstufe (BG1, BG2) nach der Bedingung

$$L_i^2 \gtrsim \frac{4}{4}\, m_{c1} \cdot m_{c2}$$

   eingestellt ist, wobei L die Begrenzungsschwelle des Zahlenvorrats für das Rückkopplungssignal der kohärenten Addition, $m_{ci}$ die Länge der verwendeten Spreizcodeperioden, $\gtrsim$ größer als oder ungefähr gleich und i = 1, 2 bedeuten,
   - jeweils einer Rückkopplungsschleife ($r_1(t)$, $r_2(t)$) zur Rückführung des Ausgangssignals eines Laufzeitgliedes ($\tau$) zum entsprechenden Addierer (KA1, KA2),
   - einem weiteren Multiplizierer (M3) zur Verknüpfung der Ausgangssignale der Laufzeitglieder ($\tau$) zu einem verbesserten Schätzwert ($\hat{c}(t)$),
   - jeweils einer Verbindung von jenem Eingang des weiteren Multiplizierers zu einem Multipliziereingang jenes Multiplizierers (M1, M2), der für den anderen Teilcodezweig vorgesehen ist.

3. Anordnung nach Anspruch 2, dadurch gekennzeichnet, daß als Laufzeitglied ($\tau$) in jedem Teilcodezweig der kohärenten Addition pro Spreizcodeperiode ($mc_1$, $mc_2$) ein Schreib-Lese-Speicher (RAM1, RAM2) in Verbindung mit einem umlaufenden Adreßzähler angeordnet ist, und daß die Adreßzähler jeweils auf die zugehörige Spreizcodeperiode ($mc_1$, $mc_2$) einstellbar sind.

4. Anordnung nach einem der Ansprüche 2 und 3, dadurch gekennzeichnet, daß am Ausgang des die verbesserten Teilcodeschätzwerte der einzelnen Teilcodeperioden miteinander verknüpfenden Multiplizierers (M3) ein Korrelator (K) als Bestandteil der DLL-Schleife vorgesehen ist über die die Taktableitung erfolgt.

5. Anordnung nach Anspruch 3 oder 4, dadurch gekennzeichnet, daß die Baugruppen der kohärenten Addition mit Ausnahme der Schreib-Lese-Speicher (RAM1, RAM2) und DLL-Filterung (LF, Q) zu einem gemeinsamen Gate-Array vereinigt sind.

## Claims

1. Method for the receiving end synchronisation in a direct-sequence spread-spectrum system with combined spreading codes with use of the coherent addition, with the following steps:

   a) the spreading code (c(t)) is formed by multiplication of at least two partial codes ($c_1$, $c_2$),

   b) a coarse estimate ($\hat{\bar{c}}(t)$) of the spreading code is derived from the received signal,

   c) coarse partial code estimates ($\hat{\bar{c}}_1(t)$, $\hat{\bar{c}}_2(t)$) are produced from this coarse estimate ($\hat{\bar{c}}(t)$) by multiplication with the respective aliquant partial code estimate ($\hat{c}_1(t)$, $\hat{c}_2(t)$), wherein these partial code estimates are each produced by recursive filtering of the coarse partial code estimates thus obtained,

   d) a feedback signal ($r_1(t)$, $r_2(t)$) is added to the respective coarse partial code estimate during the recursive filtering,

   e) this added signal is limited and

   f) a new code estimate ($\hat{c}(t)$) is produced by multiplication of two partial estimates ($\hat{c}_1(t)$, $\hat{c}_2(t)$),

   characterised thereby, that at least the condition

$$L_i^2 \gtrsim \tfrac{1}{4} m_{c1}.m_{c2}$$

   is maintained for obtaining a better stability of synchronisation, wherein L signifies the limiting threshold of the number supply for the feedback signal in the coherent addition, $m_{ci}$ signifies the length of the spreading code periods employed, $\gtrsim$ signifies greater than or approximately equal to, and i is equal to either 1 or 2.

2. Arrangement for the performance of a receiving end synchronisation in a direct-sequence spread-spectrum system with combined spreading codes with use of the coherent addition with a delay-locked loop with the following component groups:

   - a multiplier (M1, M2), to which a coarse estimate ($\hat{\bar{c}}(t)$) of the received signal is feedable, for each partial code branch,

   - a respective adder (KA1, KA2) for a coherent addition of a partial code estimate ($\hat{\bar{c}}_1(t)$, $\hat{\bar{c}}_2(t)$) behind each multiplier (M1, M2),

   - a respective limiter stage (BG1, BG2) with transit time member ($\tau$) connected therebehind at the output of each adder (KA1, KA2), wherein the numerical range limiter threshold of each limiter stage (BG1, BG2) is set according to the condition

$$L_i^2 \gtrsim \tfrac{1}{4} m_{c1}.m_{c2}$$

   wherein L signifies the limiting threshold of the number supply for the feedback signal in the coherent addition, $m_{ci}$ signifies the length of the spreading code periods employed, $\gtrsim$ signifies greater than or approximately equal to, and i is equal to either 1 or 2,

   - a respective feedback loop ($r_1(t)$, $r_2(t)$) for the return of the output signal of a transit time member ($\tau$) to the corresponding adder (KA1, KA2),

   - a further multiplier (M3) for the interlinking of the output signals of the transit time members ($\tau$) into an improved estimated value ($\hat{c}(t)$), and

   - a respective connection from that input of the further multiplier to a multiplier input of that multiplier (M1, M2), which is provided for the other partial code branch.

3. Arrangement according to claim 2, characterised thereby, that a read-write memory (RAM1, RAM2) in conjunction with a circulating address counter is arranged for each spreading code period ($mc_1$, $mc_2$) as transit time member ($\tau$) in each partial code branch of the coherent addition and that the address counters are each adjustable respectively to the associated spreading code period ($mc_1$, $mc_2$).

4. Arrangement according to one of the claims 2 and 3, characterised thereby, that a correlator (K) is provided as component of the delay-locked loop, by way of which the pulse rate derivation takes place, at the output of the multiplier (M3) interlinking the improved estimated partial code values of the individual partial code periods one with the other.

5. Arrangement according to claim 3 or 4, characterised thereby, that the component groups of the coherent addition with the exception of the read-write memories (RAM1, RAM2) and the delay-locked-loop filtering (LF, Q) are combined into a common gate array.

## Revendications

1. Procédé pour la synchronisation côté récepteur dans un système à étalement du spectre par séquence directe, à codes d'étalement combinés, avec utilisation de l'addition cohérente, comprenant les étapes suivantes:
   a) formation du code d'étalement (c(t)) par multiplication d'au moins deux codes partiels ($c_1$, $c_2$),
   b) obtention à partir du signal reçu d'une estimation grossière ($\widehat{C}(t)$) du code d'étalement,
   c) génération, à partir de cette estimation grossière ($\widehat{C}(t)$), d'estimations grossières de codes partiels ($\widehat{C}_1(t)$, $\widehat{C}_2(t)$) par multiplication par l'estimation de code partiel ($\widehat{c}_1(t)$, $\widehat{c}_2(t)$) concernée sous la forme d'un nombre premier, ces estimations de codes partiels étant générées chaque fois par filtrage récursif des estimations grossières de codes partiels ainsi obtenues,
   d) addition, lors du filtrage récursif, d'un signal de rétroaction ($r_1(t)$, $r_2(t)$) et de l'estimation grossière de code partiel concernée,
   e) limitation de ce signal additionné et
   f) génération d'une nouvelle estimation de code (c(t)) par multiplication des deux estimations partielles ($\widehat{c}_1(t)$, $\widehat{c}_2 t$)),
   caractérisé en ce que, pour atteindre une meilleure stabilité de synchronisation, on respecte au moins la condition:

$$L_i^2 \gtrsim \frac{1}{4} m_{c1} \cdot m_{c2}$$

   où
   L désigne le seuil de limitation de la réserve de nombres pour le signal de rétroaction lors de l'addition cohérente,
   $m_{ci}$ désigne la longueur des périodes de code d'étalement utilisées
   $\geq$ signifie plus grand que ou environ égal à et
   i = 1, 2.

2. Dispositif pour la mise en oeuvre d'une synchronisation côté récepteur dans un système à étalement du spectre par séquence directe, à codes d'étalement combinés, avec utilisation de l'addition cohérente à l'aide d'une boucle à retard de phase ou boucle DLL (Delai-Lock-Loop), comprenant les sous-ensembles suivants:
   - un multiplicateur (M1, M2) pour chaque branche à code partiel, auquel peut être appliquée une estimation grossière ($\widehat{C}(t)$) du signal reçu,
   - un additionneur (KA1, KA2) à la suite de chaque multiplicateur (M1, M2) pour une addition cohérente d'une estimation de code partiel ($\widehat{C}_1(t)$, $\widehat{C}_2(t)$),
   - un étage limiteur (BG1, BG2) suivi d'un organe à temps de propagation ($\tau$) à la sortie de chaque additionneur (KA1, KA2), le seuil limiteur de valence de chaque étage limiteur (BG1, BG2) étant ajusté selon la condition

$$L_i^2 \geq \tfrac{1}{4}\, m_{c1} \cdot m_{c2},$$

où L désigne le seuil de limitation de la réserve de nombres pour le signal de rétroaction de l'addition cohérente, $m_{ci}$ désigne la longueur des périodes de code d'étalement utilisées, $\geq$ signifie plus grand que ou environ égal à et i = 1, 2,
- une boucle de rétroaction ($r_1(t)$, $r_2(t)$) pour l'application en retour du signal de sortie d'un organe à temps de propagation ($\tau$) à l'additionneur (KA1, KA2) correspondant,
- un multiplicateur supplémentaire (M3) pour combiner les signaux de sortie des organes à temps de propagation ($\tau$) en une valeur estimée améliorée ($\widehat{c}(t)$), et
- une liaison menant de chacune des entrées du multiplicateur supplémentaire à une entrée du multiplicateur (M1, M2) prévu pour l'autre branche à code partiel.

3. Dispositif selon la revendication 2, caractérisé en ce que chaque branche à code partiel de l'addition cohérente comporte, en tant qu'organe à temps de propagation ($\tau$), pour chaque période de code d'étalement ($mc_1$, $mc_2$), une mémoire d'écriture-lecture (RAM1, RAM2) en combinaison avec un compteur d'adresse à répétition, et que les compteurs d'adresses peuvent être positionnés chaque fois sur la période de code d'étalement ($mc_1$, $mc_2$) correspondante.

4. Dispositif selon la revendication 2 ou 3, caractérisé en ce qu'un corrélateur (K) est prévu en tant que partie de la boucle DLL à la sortie du multiplicateur (3) combinant entre elles les valeurs d'estimation améliorées de code partiel des différentes périodes de code partiel, boucle au moyen de laquelle s'effectue l'élaboration de la cadence.

5. Dispositif selon la revendication 3 ou 4, caractérise en ce que les sous-ensembles de l'addition cohérente sont rassemblés en un réseau de portes commun à l'exception des mémoires d'écriture-lecture (RAM1, RAM2) et du filtrage DLL (LF, Q).

FIG. 1

$\hat{\hat{c}}(n \cdot T_p)$

$1 - k$

$\tau = T_p$

$k$

$+$

$\hat{c}(n \cdot T_p)$

**FIG. 2**

$\hat{\hat{c}}(n \cdot T_p)$

$+$

$r((n-1) \cdot T_p)$

$\tau = T_p$

$r(n \cdot T_p)$

$\hat{c}(n \cdot T_p)$

**FIG. 3**

# FIG. 4

# FIG. 5

# FIG. 6

EP 0 263 289 B1

FIG. 7

EP 0 263 289 B1

FIG. 8

FIG. 9

$m_c = 10403$         $L_1 = L_2 = 50$,   x o Messung

Resynchronisation

Anfangssynchronisation

$\frac{\Gamma_{syn}}{\Gamma_c}$

$150 \cdot 10^3$

$100 \cdot 10^3$

$50 \cdot 10^3$

0

$10^{-4}$        $10^{-3}$        $10^{-2}$        $10^{-1}$        $P_c^*$

EP 0 263 289 B1